# EUROPÄISCHE PATENTANMELDUNG

(11) **EP 4 751 836 A1**
(43) Veröffentlichungstag der Anmeldung: **03.06.2026**
(21) Anmeldenummer: 24216861.5
(22) Anmeldetag: 02.12.2024
(51) Int. Cl.: B23K 11/24, B23K 11/25, B23K 31/12

(54) **SCHWEISSSYSTEM UND SCHWEISSVERFAHREN**

(71) Anmelder: ISOLITE GmbH, 67063 Ludwigshafen am Rhein (DE)
(72) Erfinder: Rauchholz, Simon, 67063 Ludwigshafen am Rhein (DE); Merkler, Andreas, 67063 Ludwigshafen am Rhein (DE); Ouni, Hossni, 67063 Ludwigshafen am Rhein (DE)
(74) Vertreter: Grünecker Patent- und Rechtsanwälte PartG mbB

(57) **Zusammenfassung**

Schweißsystem zur Durchführung eines Schweißprozesses, umfassend: eine Schweißsteuerung; eine Schweißstromquelle; ein oder mehrere Kontaktierungen, wobei ein oder mehrere, insbesondere alle Kontaktierungen mit einem zu schweißendem Bauteil im Eingriff sind; eine Verteilung, wobei die Verteilung für jede der Kontaktierungen jeweils eine entsprechende Zuleitung umfasst; wobei die Verteilung ausgebildet ist, für jeden Schweißpunkt die der Kontaktierung jeweils entsprechende Zuleitung mit der Kontaktierung freizuschalten und den Schweißstrom über die jeweils entsprechende Zuleitung an die Kontaktierung zu leiten und nach dem Setzen des Schweißpunktes auf dem Bauteil wieder zu sperren.

## Beschreibung

### Gebiet der Erfindung

Die Erfindung betrifft ein Schweißsystem, Powerwelder, und eine entsprechendes Schweißverfahren.

### Stand der Technik

Industriepraxis im Widerstandsschweißen sind derzeit Hand- oder Robotergeführte Systeme mit jeweils einer Schweißsteuerung, einer Schweißstromquelle sowie einer Kontaktierung des Schweißgutes.

Hierdurch können die Prozessparameter für jeden Schweißpunkt individuell gewählt werden, ebenso ist eine Überwachung für jeden einzelnen Prozess möglich.

Um dieses System in Bezug auf Prozessgeschwindigkeit und Prozesskosten zu optimieren, können derzeit drei wesentliche Parameter beeinflusst werden:
1. Prozesszeit Schweißen
2. Kontaktiergeschwindigkeit des einzelnen Schweißpunktes
3. Positioniergeschwindigkeit zwischen Schweißpunkten

Der Punkt (1) dieser Liste wird limitiert durch die Prozessfähigkeit. Das bedeutet, ab oder unterhalb einer minimalen Prozesszeit kann kein sicherer Schweißprozess mehr dargestellt werden, also die erforderliche Qualität des Schweißpunktes und damit des Schweißprozesses kann nicht mehr erreicht werden. Bei den Punkten (2) und (3) dieser Liste bestimmt die mechanische Dynamik des Schweißsystems die maximal erreichbaren Geschwindigkeiten. Die mechanische Dynamik und damit die Punkte (2) und (3) wirken auf Punkt 1 der Liste zurück. D.h. die Prozesszeit aus diesen Punkten kommt zur Prozesszeit aus Punkt 1 hinzu. Somit stellt die Prozesszeit den mit Abstand größten Bestandteil der Prozesszeit dar.

Da typischerweise jeder Schweißpunkt mit einer individuellen Bewegung ausgeführt wird, summiert sich die Gesamtprozesszeit über die Anzahl der Schweißpunkte eines Bauteils signifikant auf.

Um die Gesamtprozesszeit zu optimieren, ist es folglich wünschenswert die Anzahl der notwendigen Kontaktierungen, siehe Punkt (2), und der Positionierungen, sieh Punkt (3), zu reduzieren.

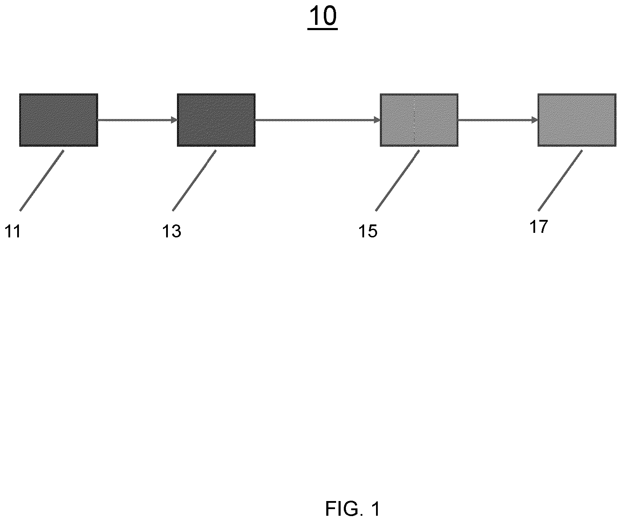

FIG. 1 zeigt herkömmliche Elemente eines Schweißsystems. Das in FIG. 1 dargestellte System führt die Positionierungen aus mit welchen die Kontaktierung von Schweißpunkt zu Schweißpunkt bewegt wird.

FIG. 1 illustriert ein Schweißsystem 10 mit einer Schweißsteuerung 11, einer Schweißstromquelle 13, einer Kontaktierung 15 sowie Schweißgut, insbesondere ein Bauteil 17. Das Schweißsystem 10 wird von einem Nutzer oder einem Industrieroboter gehandhabt.

In der Industriellen Serienfertigung kommt üblicherweise ein Industrieroboter, nachfolgend kurz Roboter genannt, zum Einsatz um einen Schweißaktuator zum Bauteil zu führen, in selteneren Fällen wird das Bauteil zum Aktuator geführt. Nachdem ein Mitarbeiter die zu fügenden Bauteile in eine Spannvorrichtung der Anlage übergeben hat, schließt der Sicherheitskreis und der Prozessablauf startet.

Der Schweißaktuator wird durch den Roboter zum Bauteil 17 geführt und Schweißpunkt für Schweißpunkt neu positioniert. An jeder Schweißposition wird dann die Kontaktierung geschlossen und der Schweißprozess durchgeführt. Nach Ende des Schweißprozesses wird die Kontaktierung wieder geöffnet und die nächste Positionierung des Schweißaktuators durch den Industrieroboter erfolgt.

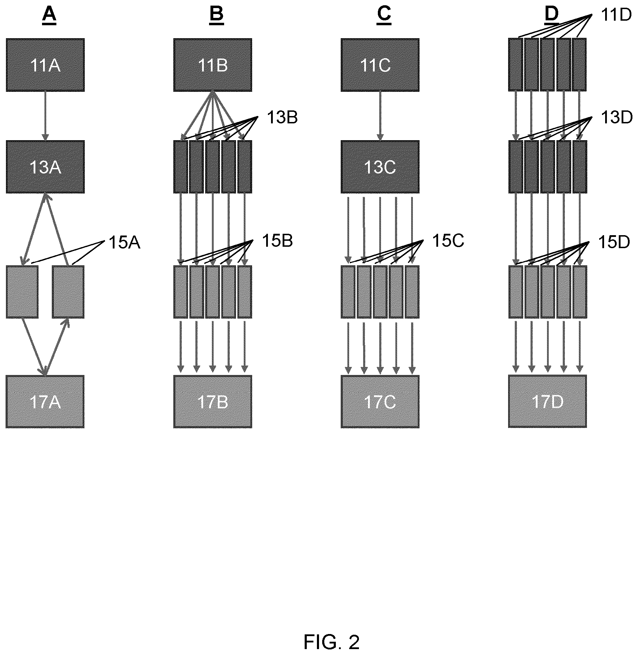

Zu dem dargestellten System gibt es verschiedene alternative Lösungsansätze, von denen einige nachfolgend aufgelistet sind und in FIG. 2 schematisch dargestellt sind.

### A) Reihenschaltung von zwei Schweißpunkten

Das System A in FIG. 2 entspricht im Wesentlichen dem System 10 aus FIG. 1. System A umfasst eine Schweißsteuerung 11A, die mit einer Schweißstromquelle 13A verbunden ist und diese Steuern kann. Die Schweißstromquelle 13A ist über eine Kontaktierung 15A mit einem Bauteil 17A verbunden. Für System A sind zwei Kontaktierungen 15A gezeigt. Hierbei wird für System A der Schweißstrom von der Schweißstromquelle 13A durch maximal zwei Schweißpunkte geleitet, indem Zu- und Ableitung des Schweißstroms an je einer Kontaktierung 15A gebunden sind. Hiermit kann die Anzahl der Kontaktierungen, vgl. Punkt (2), sowie der Positionierungen, vgl. Punkt (3), halbiert werden, jedoch entfallen die Möglichkeiten einer individuellen Regelung und Überwachung des Verfahrens. Des Weiteren ist das Verfahren durch die Aktuatoren geometrisch limitiert.

### B) Verwendung mehrerer Schweißstromquellen an einer Schweißsteuerung

Das System B in FIG. 2 zeigt eine Schweißsteuerung 11B, mehrere Schweißstromquellen 13B, mehrere Kontaktierungen 15B sowie ein Werkstück/Bauteil 17B. Die Anzahl von Schweißstromquellen 13B und entsprechend Kontaktierungen 15B ist dabei rein beispielhaft. Geschaltet wird hierbei eine Steuerspannung, welche die Signale der Schweißsteuerung 11B zu den Schweißstromquellen 13B übermittelt. Für das System B der FIG. 2 gilt: Durch Verbinden mehrerer Schweißstromquellen 13B mit einer einzigen Schweißsteuerung 11B können alle Schweißpunkte am Werkstück 17B gleichzeitig kontaktiert werden. Somit entfällt die Berücksichtigung der Punkte (2) und (3) der oben genannten Liste. Ein Nachteil dieser Lösung ist jedoch die Notwendigkeit jeweils einer individuellen Schweißstromquelle 13B je Kontaktierung 15B. Dadurch wird der Einsatz dieser Alternative bei größeren Schweißpunktanzahlen unrentabel sein.

### C) Mehrere Kontaktierungen an einer Schweißstromquelle

Das System C in FIG. 2 zeigt eine Schweißsteuerung 11C, eine Schweißstromquelle 13C, mehrere Kontaktierungen 15C die mit dem Bauteil 17C verbunden sind. Bei der Alternative gemäß System C werden also alle Kontaktierungen 15C direkt mit einer (einzigen?) Schweißstromquelle 13C verbunden. Somit entfällt somit die Berücksichtigung der Punkte (2) und (3) der oben genannten Liste. In verschiedenen Versuchsaufbauten konnte jedoch nachgewiesen werden, dass eine Prozessfähigkeit nicht gegeben ist, da der Schweißstrom sich nicht gleichmäßig auf die Kontaktierungen verteilt. Ebenso ist es nachteilig bei dieser Alternative, dass die Möglichkeit einer individuellen Parametrierung und Überwachung der Schweißpunkte entfällt.

### D) Verwendung mehrerer, häufig gleichartiger, Schweißsysteme

System D in FIG. 2 zeigt eine Schweißsystem D, das sich aus eine Gruppe von gleichartigen Schweißsystem zusammensetzt. System D umfasst mehrere Schweißsteuerungen 11D, entsprechend mehrere Schweißstromquellen 13D, ferner entsprechend mehrere Kontaktierung 15D, die jeweils mit dem Bauteil 17D. Mit anderen Worten, in System D werden die jeweiligen Elemente der Systeme wie Steuerung 11D, Stromquelle 13D, Kontaktierung 15D, jeweils parallel zueinander eingesetzt.

In dem System D der FIG. 2 werden entweder alle Schweißpunkte einzeln kontaktiert und mit Steuerung 11D sowie Schweißstromquelle 13D ausgestattet oder es werden mehrere, meist robotergeführte Systeme eingesetzt, welche jeweils einen gewissen Anteil der gesamt anfallenden Schweißpunkte ausführen. Im Hinblick auf die oben genannte Liste reduzieren sich die Punkte (2) und (3) der oben genannten Liste um einen Faktor "Anzahl der eingesetzten Schweißsysteme", während parallel dazu der Materialeinsatz steigt, möglichweise sogar erheblich.

Bei den Varianten System B und System D der FIG. 2 ist des Weiteren darauf hinzuweisen, dass Schweißungen am gleichen Bauteil nicht zeitgleich erfolgen. Damit können Wechselwirkungen zwischen den Schweißstromquellen vermieden werden.

### Beschreibung der Erfindung

Im Hinblick auf die skizzierten Nachteile im Stand der Technik ist es Aufgabe der vorliegenden Erfindung, diese Nachteile zu minimieren und die Prozesszeit des Schweißvorgangs zu optimieren, insbesondere zu reduzieren.

Diese Aufgabe wird durch ein Schweißsystem gemäß Anspruch 1 und ein entsprechendes Verfahren gemäß Anspruch 5 gelöst.

Die vorliegende Erfindung stellt bereit:
Ein Schweißsystem zur Durchführung eines Schweißprozesses, umfassend: eine Schweißsteuerung; eine Schweißstromquelle; ein oder mehrere Kontaktierungen, wobei eine oder mehrere, insbesondere alle Kontaktierungen mit einem zu schweißendem Bauteil im Eingriff sind; eine Verteilung, wobei die Verteilung für jede der Kontaktierungen jeweils eine entsprechende Zuleitung umfasst; wobei die Verteilung ausgebildet ist, für jeden Schweißpunkt die der Kontaktierung jeweils entsprechende Zuleitung mit der Kontaktierung freizuschalten und den Schweißstrom über die jeweils entsprechende Zuleitung an die Kontaktierung zu leiten und nach dem Setzen des Schweißpunktes auf dem Bauteil wieder zu sperren.

Das Schweißsystem wie oben beschrieben kann femer ausgebildet sein, gemäß einem vordefinierten Programm die Zuleitungen zur Durchführung des Schweißprozesses auszuwählen.

In dem Schweißsystem wie oben beschrieben, kann das vordefinierte Programm durch die Schweißsteuerung bereitgestellt werden.

In dem Schweißsystem 'wie oben beschreiben können die Kontaktierungen aktive, insbesondere angetriebene Kontaktierungen und/oder passive, insbesondere federgelagerte Kontaktierungen und/oder aktive, insbesondere angetriebene Gruppen aus mehreren passiven Kontaktierungen umfassen.

Die Erfindung stellt ferner ein Schweißverfahren mit einem Schweißsystem wie oben beschrieben bereit, wobei das Verfahren die folgenden Schritte umfasst: für alle mit einem zu schweißendem Bauteil im Eingriff stehenden Kontaktierungen: Freischalten der einer Kontaktierung entsprechenden Zuleitung zur Kontaktierung durch die Verteilung; Durchführung des Schweißens für die freigeschaltete Kontaktierung; Rückmelden der Beendigung des Schweißens für die Kontaktierung, dazu Setzen eines Statusindikators im Hinblick auf die erfolgreiche Durchführung des Schweißens; Trennen der Kontaktierung für den Schweißpunkt.

Das Schweißverfahren wie oben beschrieben, kann ferner umfassen: nach dem Trennen der Kontaktierung für den Schweißpunkt Überprüfen des Statusindikators, bei erfolgreich indizierter Durchführung des Schweißens durch den Statusindikator Fortsetzen des Schweißprozesses mit der nächsten Kontaktierung, sonst Anzeigen eines Fehlerzustandes und Verarbeiten des Fehlerzustands.

In dem Schweißverfahren wie oben beschrieben, kann das Verarbeiten des Fehlerzustands umfassen: Wiederholen des fehlerhaften Schweißpunktes, oder Überspringen des fehlerhaften Schweißpunktes und Fortfahren mit dem nächsten Schweißpunkt; oder Abbrechen des Schweißprozesses für das Bauteil, insbesondere anschließend Fortführen des Schweißprozesses für ein anderes Bauteil.

In dem Schweißverfahren wie oben beschrieben kann das Verarbeiten des Fehlerzustands durch die Schweißsteuerung und/oder durch ein externes Überwachungssystem erfolgen kann.

In dem Schweißverfahren wie oben beschrieben kann das Verfahren nach Bearbeiten aller Kontaktierungen ein Signal ausgeben, dass der Schweißprozess erfolgreich war und den Schweißprozess dann beendet.

In dem Schweißverfahren wie oben beschrieben kann das Schweißverfahren ferner einen Schritt des Überprüfens von vorgegebenen Startbedingungen umfassen.

### Beschreibung der Figuren

- Fig. 1: illustriert herkömmliche Elemente eines Schweißsystems.
- Fig. 2: illustriert verschiedene alternative Schweißsysteme zu dem System in FIG. 1.
- Fig. 3: illustriert eine Ausführungsform eines Schweißsystems gemäß der vorliegenden Erfindung.
- Fig. 4: illustriert eine erfindungsgemäßes Verfahren für einen Schweißprozess mit einem Schweißsystem gemäß FIG. 3.
- Fig. 5: illustriert einen Vergleich der Alternativen aus den Systemen aus FIG. 1 und FIG. 2 mit dem erfindungsgemäßen System aus FIG. 3 und FIG. 4.

### Detaillierte Beschreibung

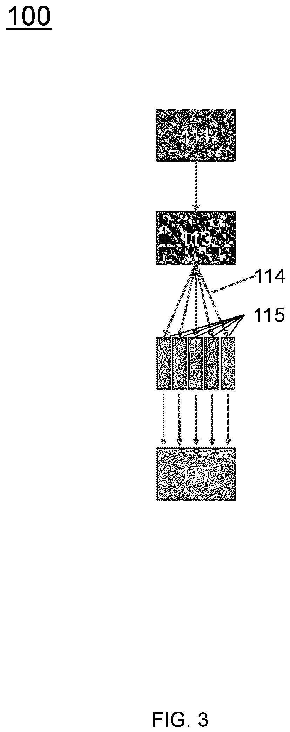

FIG. 3 zeigt eine Ausführungsform eines Schweißsystems 100 gemäß der vorliegenden Erfindung. Das erfindungsgemäße Schweißsystem 100 umfasst eine Schweißsteuerung 111 und eine oder mehrere, insbesondere eine einzige Schweißstromquelle 113. Ferner zeigt FIG. 2 das zu bearbeitende Werkstück / Bauteil 117. Das Schweißsystem 100 umfasst ferner eine oder mehrere, insbesondere eine Vielzahl von Kontaktierungen 115. In dem erfindungsgemäßen Schweißsystem 100 schaltet den Schweißstrom aus der Schweißstromquelle 113 zwischen der Schweißstromquelle 113 und den Kontaktierungen 115. Dabei sind ein oder mehrere, insbesondere alle Kontaktierungen 115 gleichzeitig im Eingriff. Von der Schweißstromquelle 113 aus wird der Schweißstrom auf eine Verteilung 114 geleitet, welche einen Ausgang je Kontaktierung 115 besitzt. Für jeden Schweißpunkt wird die jeweilige Zuleitung zur Kontaktierung 115 freigeschaltet und nach Ende des Schweißablaufs wieder gesperrt.

Hierdurch entfallen im Wesentlichen die Probleme im Hinblick auf die Kontaktiergeschwindigkeit, siehe Punkt (2) der oben genannten Liste, und ebenso die Probleme im Hinblick auf die Positioniergeschwindigkeit, siehe Punkt (3) der oben genannten List. Dabei bleibt die individuelle Parametrierbarkeit und Überwachung der Schweißpunkte erhalten. Dadurch kann die Prozessgeschwindigkeit, siehe Punkt (1) der oben genannten Liste, erhöht werden und die Prozesszeit optimiert werden.

Das System 100 und das damit verbundene Verfahren sind dabei grundsätzlich unabhängig von sowohl der verwendeten Schweißsteuerung als auch der Schweißstromquelle und können daher universell skalierbar eingesetzt werden. Limitierend für die Prozesszeit verbleiben lediglich die Prozesszeit Schweißen, siehe Punkt (1), als Funktion der Leistung von Schweißsteuerung 111 und Schweißstromquelle 115.

Ein weiterer Vorteil insbesondere gegenüber der Alternative des System B in FIG. 2 ist es, dass die Notwendigkeit, mehrere Schweißstromquellen einzusetzen, entfällt. Das bedeutet auch, dass die eingesetzte Schalttechnik nur einmal je System implementiert werden muss.

Ferner können für die Umsetzung der Erfindung kompakte und reduzierte Kontaktierungen nützlich sein, um eine noch größere Optimierung der Prozesszeit gegenüber dem Stand der Technik zu erreichen. Hierzu können sowohl einzeln aktive, also angetriebene, Kontaktierungen verwendet werden und/oder rein passive, beispielsweise federgelagerte Kontaktierungen, oder auch aktive, also angetriebene, Gruppen von passiven Kontaktierungen zum Einsatz kommen.

Bei der dargestellten Referenz handelt es sich um eine übliche Roboterschweißzelle mit einfach vorhandener Kontaktierung sowie Leistungstechnik. Die Erfindung verspricht eine verbesserte Taktzeit bei gleichzeitig reduziertem Investitionsvolumen. Am nächsten zum Bediener des Systems soll hierbei die Leistungsverschaltung sein; der Bediener startet den Gesamtprozess wie auch an einer Roboteranlage der Ablauf der Automation gestartet wird, in welche das Schweißsystem eingebunden ist.

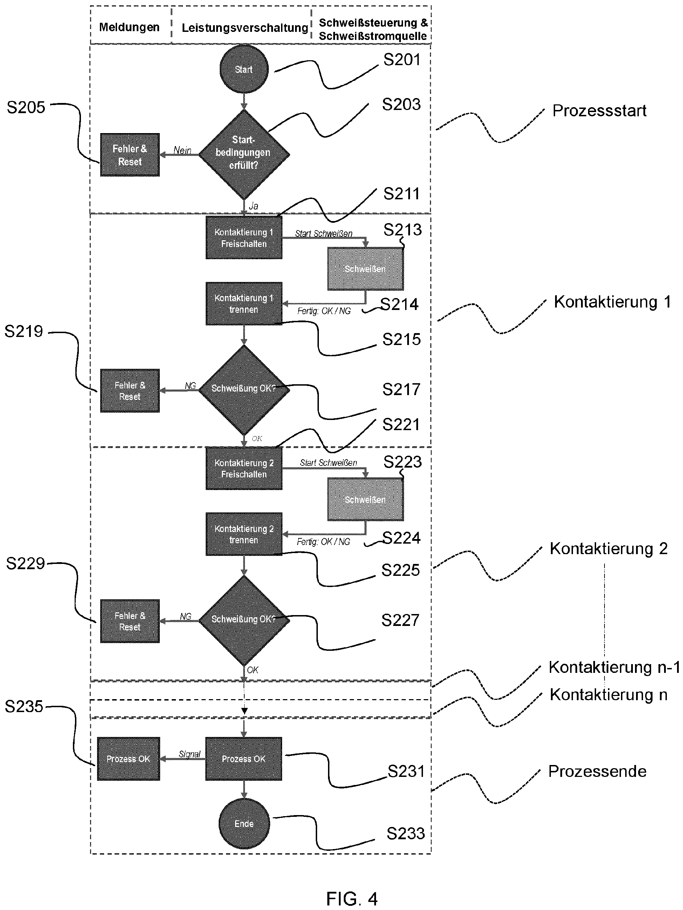

Im Folgenden wird in FIG. 4 ein beispielhafter Ablauf einer erfindungsgemäßen Leistungsverschaltung für ein erfindungsgemäßes Schweißsystem gemäß FIG. 3 dargestellt. Im gewählten Beispiel in FIG. 4 sollen mehrere, beispielsweise 3 oder gar n Schweißpunkte mit dem gleichen Schweißprogramm ausgeführt und einzeln ausgewertet werden. Im Falle eines Schweißfehlers kann der Prozess der Leistungsverschaltung unter Ausgabe einer Fehlermeldung zurückgesetzt werden, "Reset". In dieser Situation des Reset würde der Prozess wieder bei "Start" beginnen.

FIG. 4 illustriert ein Verfahren einer Leistungsverschaltung. In FIG. 4 sind drei Spalten gezeigt, wobei die linke Spalte sich auf Meldungen bezieht, die mittlere Spalte sich auf die eigentliche Leistungsverschaltung, also die Schritte des Verfahrens und die rechte Spalte auf das eigentliche Schweißen, also Schweißstromquelle und Schweißsteuerung. Dabei können die Schweißstromquelle und die Schweißsteuerung aus dem System aus der FIG. 3 sein. Dem Verfahren, welches in FIG. 4 dargestellt ist, entspricht eine sogenannte Rezeptur. In der Rezeptur ist typischerweise hinterlegt, hinterlegt welche Kontaktierungen sich im Eingriff befinden, dann werden nur diese Kontaktierung nachfolgend ausgeführt. Es versteht sich, dass das Verfahren sich alternativ aber auch über alle Kontaktierungen erstrecken kann.

FIG. 4 zeigt blockweise einen Prozessstart / Prozessbeginn zu Beginn und ein Prozessende zum Schluss des Verfahrens, dazwischen werden die Kontaktierungen 1, 2, ... n-1, n abgearbeitet.

Das erfindungsgemäße Verfahren in FIG. 4 beginnt mit dem Prozessstart mit dem Schritt S201. Optional wird dabei zunächst geprüft, Schritt S203, ob die vordefinierten Startbedingungen erfüllt sind. Sollten die vordefinierten Startbedingungen nicht erfüllt sein, bricht das Verfahren mit einer Fehlermeldung ab, Schritt S205. Anderenfalls wird das Verfahren fortgesetzt.

Das Verfahren umfasst nun für alle mit einem zu schweißendem Bauteil im Eingriff stehenden Kontaktierungen, alternativ für alle Kontaktierungen: Freischalten, Schritt S211, der ersten Kontaktierung. Damit kann für den mit dieser Kontaktierung verbundenen Schweißpunkt geschweißt werden, Schritt S213.

Im Schritt S214 erfolgt dann ein Rückmelden der Beendigung des Schweißens für die Kontaktierung, dazu wir ein Statusindikator, etwa eine Flag, im Hinblick auf eine erfolgreiche Durchführung des Schweißens übermittelt. Der Statusindikator kann dabei ein "OK" übermitteln, dass der Schweißpunkt in Ordnung ist oder ein "NG", not good (not okay), dass der Schweißpunkt nicht in Ordnung ist. Im nachfolgenden Schritt S215 erfolgt dann das Trennen der Kontaktierung.

Optional kann im nachfolgenden Schritt S217 der zuvor übermittelte Statusindikator ausgewertet werden. Falls der Statusindikator den Wert "NG" angibt, so kann im Schritt S219 ein Fehler ausgegeben werden. In FIG. 4 ist dann im Schritt S219 ein Reset angegeben. Das Verfahren kann dann ein Wiederholen des fehlerhaften Schweißpunktes einleiten, also den Schweißpunkt erneut versuchen. Oder das Verfahren kann das Überspringen des fehlerhaften Schweißpunktes einleiten und mit dem nächsten Schweißpunkt fortfahren. Oder das Verfahren kann das Abbrechen des Schweißprozesses für das Bauteil vornehmen, insbesondere anschließend kann das Verfahren Fortführen des Schweißprozesses für ein anderes Bauteil vornehmen.

In FIG. 4 ist dargestellt, dass das Verfahren nun zur nächsten Kontaktierung, hier Kontaktierung 2, übergeht. Somit entsprechen die Schritte S223 und S224 den Schritten S213 und S214 für die erste Kontaktierung. Die Schritte S225, S227 und S229 bei der zweiten Kontaktierung entsprechend den Schritten S215, S217, und S219 bei der ersten Kontaktierung.

Das in FIG. 4 dargestellte Verfahren setzt sich dann bis zur n-ten Kontaktierung fort. Im letzten Block, dem Prozessende überprüft, Schritt S231, das Verfahren optional, ob der gesamte Schweißprozess in Ordnung war bzw. ist und gibt ein entsprechendes Signal, S235, aus. Mit dem Schritt S233 endet das Verfahren.

### Nachweis

Im Versuchsaufbau zum Nachweis der Funktion sowie der Anwendbarkeit im industriellen Maßstab wurden federgelagerte Kontaktierungen gewählt, die durch den Schließmechanismus einer Spannvorrichtung aktiviert werden.

Der Schaltmechanismus wurde für zunächst zehn Schweißpunkte umgesetzt, eine Skalierung ist ohne negativen Einfluss auf die Leistungsdaten möglich.

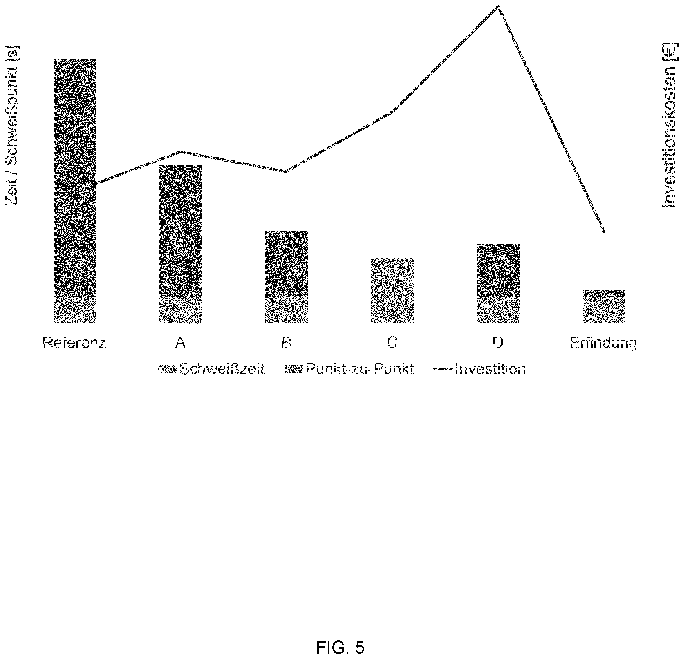

Dies ist auch in der FIG. 5 dargestellt, wo eine Referenz verglichen wird mit den Alternativen A, B, C, und D wie oben beschreiben, sowie mit dem erfindungsgemäßen System und dem erfindungsgemäßen Verfahren. Dabei zeigen in FIG. 5 die Säulen im unteren Teil die Schweißzeit, im oberen Teil die Zeit pro Schweißpunkt. Die gezeigte Kurve deutet die Investitionskosten für die einzelnen Systeme an.

Im Vergleich zu einer robotergeführten Lösung nach Stand der Technik konnte ohne weiteres eine Reduzierung der Gesamtprozesszeit für ein Referenzbauteil von Faktor 3 erreicht werden, mit Wahl einer besser geeigneten Schweißsteuerung wird eine Reduzierung von Faktor 10 zur Referenz erwartet.

## Patentansprüche

1. Schweißsystem (100) zur Durchführung eines Schweißprozesses, umfassend:
eine Schweißsteuerung (111);
eine Schweißstromquelle (113);
ein oder mehrere Kontaktierungen (115), wobei ein oder mehrere, insbesondere alle Kontaktierungen mit einem zu schweißendem Bauteil (117) im Eingriff sind;
eine Verteilung (114), wobei die Verteilung (114) für jede der Kontaktierungen jeweils eine entsprechende Zuleitung umfasst;
wobei die Verteilung (114) ausgebildet ist, für jeden Schweißpunkt die der Kontaktierung jeweils entsprechende Zuleitung mit der Kontaktierung freizuschalten und den Schweißstrom über die jeweils entsprechende Zuleitung an die Kontaktierung zu leiten und nach dem Setzen des Schweißpunktes auf dem Bauteil (117) wieder zu sperren.

2. Schweißsystem (100) gemäß Anspruch 1, wobei das Schweißsystem (100) ausgebildet ist, gemäß einem vordefinierten Programm die Zuleitungen zur Durchführung des Schweißprozesses auszuwählen.

3. Schweißsystem (100) gemäß Anspruch 2, wobei das vordefinierte Programm durch die Schweißsteuerung bereitgestellt wird.

4. Schweißsystem (100) gemäß wenigstens einem der Ansprüche 1 - 3, wobei die Kontaktierungen aktive, insbesondere angetriebene Kontaktierungen und/oder passive, insbesondere federgelagerte Kontaktierungen und/oder aktive, insbesondere angetriebene Gruppen aus mehreren passiven Kontaktierungen umfassen können.

5. Schweißverfahren mit einem Schweißsystem gemäß Anspruch 1, das Verfahren umfassend die Schritte:
für alle mit einem zu schweißendem Bauteil (117) im Eingriff stehenden Kontaktierungen:
Freischalten (S211) der einer Kontaktierung entsprechenden Zuleitung zur Kontaktierung durch die Verteilung (114);
Durchführung (S213) des Schweißens für die freigeschaltete Kontaktierung;
Rückmelden (S214) der Beendigung des Schweißens für die Kontaktierung, dazu Setzen eines Statusindikators im Hinblick auf die erfolgreiche Durchführung des Schweißens;
Trennen (S215) der Kontaktierung für den Schweißpunkt.

6. Schweißverfahren gemäß Anspruch 5, ferner umfassend:
nach dem Trennen (S215) der Kontaktierung für den Schweißpunkt Überprüfen (S217) des Statusindikators, bei erfolgreich indizierter Durchführung des Schweißens durch den Statusindikator Fortsetzen des Schweißprozesses mit der nächsten Kontaktierung (S223), sonst Anzeigen (S219) eines Fehlerzustandes und Verarbeiten des Fehlerzustands.

7. Schweißverfahren gemäß Anspruch 6, wobei das Verarbeiten des Fehlerzustands umfasst:
Wiederholen des fehlerhaften Schweißpunktes, oder
Überspringen des fehlerhaften Schweißpunktes und Fortfahren mit dem nächsten Schweißpunkt; oder
Abbrechen des Schweißprozesses für das Bauteil (117), insbesondere anschließend Fortführen des Schweißprozesses für ein anderes Bauteil.

8. Schweißverfahren gemäß Anspruch 6 oder 7, wobei das Verarbeiten des Fehlerzustands durch die Schweißsteuerung (111) und/oder durch ein externes Überwachungssystem erfolgen kann.

9. Schweißverfahren gemäß wenigstens einem der Ansprüche 5 bis 8, wobei das Verfahren nach Bearbeiten aller mit dem zu schweißenden Bauteil (117) im Eingriff stehenden Kontaktierungen ein Signal ausgibt (S231, S235), dass der Schweißprozess erfolgreich war und den Schweißprozess dann beendet (S233).

10. Schweißverfahren gemäß wenigstens einem der Ansprüche 5 bis 9, wobei das Schweißverfahren ferner einen Schritt (S203) des Überprüfens von vorgegebenen Startbedingungen umfasst.
